# FASCICULE DE BREVET EUROPEEN

(11) **EP 1 107 925 B1**
(45) Date de publication et mention de la délivrance du brevet: **21.08.2002**
(21) Numéro de dépôt: 99929391.3
(22) Date de dépôt: 29.06.1999
(51) Int. Cl.: B65G 1/08

(54) **DISTRIBUTEUR AUTOMATIQUE D'OBJET PAR GRAVITE SUR DES GLISSIERES**
AUTOMATISCHE VORRICHTUNG ZUR ABGABE VON GEGENSTÄNDEN AUF GLEITSCHIENEN
AUTOMATIC DISPENSER OF OBJECTS BY GRAVITY ON SLIDES

(30) Priorité: 25.08.1998 FR 9810668
(43) Date de publication de la demande: 20.06.2001
(73) Titulaire: Casuccio, Juan Blas, 06000 Nice (FR)
(72) Inventeur: Casuccio, Juan Blas, 06000 Nice (FR)
(74) Mandataire: Hautier, Jean-Louis
(86) Numéro de dépôt international: FR9901606
(87) Numéro de publication internationale: WO00010895

(56) Documents cités:
- EP-A- 0 779 605
- WO-A-96/10446
- US-A- 2 353 394

## Description

L'invention a pour objet un distributeur automatique d'objet par gravité sur des glissières.

La présente invention concerne un dispositif, destiné à contenir et délivrer des objets sur commande d'un ensemble électronique assurant la gestion.

Les dispositifs actuels de distribution automatique utilisent, à notre connaissance, des tambours, des paniers, des vis sans fin, des tiroirs et des glissières inclinés selon les caractéristiques des produits pouvant aller de 20 à 90 degrés par rapport à l'horizontale.

Les avantages de cette dernière technique sont multiples, spécialement dans la distribution des compact disques, entre autres, permettant à ceux-ci, de se mouvoir par gravité et se positionner horizontalement ou verticalement, selon le dispositif choisi, pour être éjectés vers la bouche de transit de l'appareil, sur ordre de l'ensemble électronique.

En utilisant la gravité pour permettre au produit de se déplacer, pour se mettre en position d'être libéré, le risque existe que deux ou trois unités du même produit soient éjectés en même temps, la présente invention apporte une solution au problème par son mécanisme autobloquant.

L'état de la technique peut être défini par les brevets *suivants* :
- *EP 0.779.605 A2 : ce document concerne des linéaires de présentation comprenant chacun plusieurs compartiments de stockage pour articles disposés verticalement et latéralement, les compartiments de stockage des articles contenant chacun plusieurs articles disposés inclinés vers l'avant, les articles dans chaque compartiment de stockage d'articles sont maintenus au moyen d'une butée, laquelle peut se déplacer entre une position de retenue des articles permettant d'empêcher la chute des articles et une position de libération permettant la chute libre des articles. A l'endroit où l'argent est réglé, un seau est transporté jusqu'à la position où l'article sélectionné doit tomber du compartiment de stockage de l'article qui retient l'article et la position de la butée passe à la position de libération de l'article par une opération réalisée du côté du seau. Par conséquent, l'article sélectionné est déposé dans le seau, lequel est ensuite transporté jusqu'à un port de sortie de l'article. La vente de l'article est ainsi réalisée. De cette façon, le système de commande coûteux inclus dans la structure de déplacement de la butée, c'est-à-dire la structure de sortie de l'article sélectionné du linéaire de présentation correspondant n'est présent que sur le seau et il est donc possible de fournir un équipement de vente automatique de grandes dimensions et moins coûteux.*

Le dispositif d'éjection décrit dans ce brevet est très complexe donc coûteux et peu fiable. Le mouvement de basculement est réalisé par dessous l'objet à distribuer.
- *EP-0.343.505 A2 : ce document concerne un magasin de marchandises utilisé par exemple pour le stockage de marchandises dans un distributeur automatique, qui se compose d'au moins un compartiment vertical avec un moyen de retenue disposé à l'extrémité inférieure du compartiment. Un tel magasin doit permettre que les marchandises soient reprises de façon contrôlée dans l'ordre dans lequel elles ont été introduites. En outre, la construction doit être compacte et on doit pouvoir stocker et reprendre convenablement des objets même de tailles différentes. Le moyen de retenue du magasin selon l'invention comporte, dans ce but, un obturateur formant le bas du compartiment ainsi qu'un arrêtoir disposé au-dessus. En outre, aussi bien l'obturateur que l'arrêtoir sont réalisés sous forme de volets qui sont disposés pivotant sur une paroi du compartiment et peuvent être rabattus à l'intérieur du compartiment.*
- *WO 96*/*10446 : Appareil placé dans une machine automatique et destiné au stockage d'objets sphériques, par exemple des balles de golf, et servant à distribuer un certain nombres d'objets selon le besoin. Ledit appareil comprend un magasin doté d'un certain nombre de pistes d'objets placés côte à côte, lesdites pistes constituant ensemble un fond à ce magasin contenant des objets; lesdites pistes débouchent sur un canal de distribution. Des dispositifs retiennent les objets dans les pistes jusqu'à ce qu'il soit nécessaire de laisser tomber un certain nombre d'objets dans le canal en vue de leur distribution. Le dispositif de retenue se présente sous forme de patte qui s'étend en travers d'une piste d'objets. Il est doté d'une première partie de blocage qui, dans une première position, s'étend vers le bas dans la piste des objets afin d'empêcher ces derniers de quitter la piste et dans une autre position, après pivotement de la patte avec la première partie de blocage, laisse un certain nombre d'objets pénétrer dans le canal. Ledit dispositif de retenue comporte une seconde partie* *de blocage qui, dans ladite première position, permet le mouvement des objets sur la première partie de blocage et après pivotement de la patte avec ladite première partie de blocage pour atteindre l'autre position, interfère avec l'objet dans la piste, ledit objet devant être maintenu dans la piste tandis que ledit objet ou les objets précédents sont libérés dans le canal.*
- *EP-0.647.927 A1 : Dispositif de distribution automatique d'objets comprenant des moyens de stockage des objets et des moyens de distribution, ledit dispositif comportant un mécanisme de sectionnement de rangée d'objets, comprenant un moyen d'éjection parcourant un circuit fermé, ledit moyen d'éjection agissant à chaque tour de circuit sur l'objet situé à une extrémité de la rangée d'objet, caractérisé en ce que ledit doigt d'éjection comprend un poussoir et à l'arrière de celui-ci, une roulette faisant saillie vers l'extérieur du circuit fermé, au-delà du plan supérieur dudit poussoir.*
- *FR-2.624.637 : ce document concerne un distributeur automatique d'objets et notamment de clés comprenant des moyens de commande de la distribution d'objets, des moyens de rétention et de libération d'objets, intégrés dans un bâti. Les moyens de rétention et de libération d'objets comprennent au moins une tige d'accrochage d'objets et des moyens d'actionnement de ladite tige entre deux positions extrêmes, une première position dans laquelle les objets sont retenus, et une deuxième position dans laquelle les objets sont libérés.*
- *FR-2.622.090 : tambour de stockage vertical, d'objets unitaires, par casiers verticaux, ouverts vers l'extérieur du tambour, muni d'un système de blocage automatique du produit contenu dans les casiers, par un système à bille actionné par un ressort.*
- *on connaît du document US-A-2.353.394, un appareil pour contenir et distribuer des paquets montés sur un support incliné dans un mouvement de glissement.*

*Un système à levier, entraîné en rotation par une tige et disposé sous le paquet placé le plus bas sur le support, assure le soulèvement de la partie basse du paquet, son élèvement au-delà d'une bordure au bas du support et son éjection par gravité.*

*Un tel système n'offre aucune rétention de l'objet suivant celui à délivrer. Il exerce donc un effet de poussée sur l'objet à délivrer ce qui est nuisible à la fiabilité du fonctionnement. En effet, on risque une descente trop rapide des objets successifs, surtout s'ils sont pesants, entraînant des chocs.*

*Le distributeur automatique d'objet est du type utilisant des glissières de taille et d'inclinaison variable.*

Il est composé de moyens de maintien ou de libération des produits ou objets stockés sur les glissières et de moyens d'éjection desdits objets. Lesdits moyens sont actionnés par des électroaimants gérés électroniquement.

Lesdits moyens de maintien ou de libération et d'éjection des objets sont des pattes.

Un ou plusieurs moyens de temporisation sont mis en place pour que les pattes suivant leur fonction agissent avec un décalage dans le temps par rapport à la première action du premier type de pattes pour éviter que plusieurs objets s'engagent ou soient éjectés.

Selon un mode de réalisation, lesdites pattes sont montées coaxialement solidaires d'un axe pivotant.

Selon un autre mode de réalisation, lesdites pattes selon leur fonction sont disposées dans des plans différents pour agir alternativement.

Selon un autre mode de réalisation selon leur fonction les pattes sont montées chacune sur un axe pivotant différent.

Selon un autre mode de réalisation, les axes pivotants sont dans le même plan.

Selon un autre mode de réalisation, les axes pivotants actionnant les pattes de maintien et de libération sont disposés dans deux plans perpendiculaires.

Selon un autre mode de réalisation, les moyens d'éjection sont des pattes en forme de L dont la petite barre du L sert à maintenir les objets disposés sur la glissière inclinée. La patte est orientée de manière à ce que la petite barre du L soit dirigée vers le bas.

Selon un autre mode de réalisation, le moyen d'éjection est une patte qui se termine par une paroi verticale, les objets étant disposés verticalement sur la glissière inclinée, la glissière inclinée débouche sur une fenêtre disposée dans un plan inférieure à ladite glissière, ladite fenêtre est découpée dans un plan horizontal qui fait office de support de transition, la paroi verticale mobile en se déplaçant vient positionner, au moment adéquat, l'objet à distribuer en regard de ladite fenêtre pour qu'il soit éjecté par cette fenêtre par simple gravité.

Selon un autre mode de réalisation, le moyen d'éjection est une patte formant un ergot d'éjection dans la partie terminale du plan incliné de la glissière, ledit ergot fait saillie dans ledit plan pour basculer l'objet à distribuer hors de la glissière et au-dessus de son rebord frontal.

Dans ce mode de réalisation, le moyen de maintien de libération de l'objet dans la glissière est un ergot latéral disposé sur une des bordures longitudinales de la glissière inclinée.

Selon une autre possibilité, le distributeur comporte au moins une bordure longitudinale dont la position latérale est ajustable par des moyens de réglage.

Les moyens de réglage peuvent être constitués :
- d'au moins deux séries d'une ou plusieurs fentes formées dans l'épaisseur de la glissière, lesdites séries de fentes étant décalées latéralement ;
- de crans en nombre et position correspondant aux nombre et position des fentes des séries de fentes, lesdits crans étant formés sur la tranche inférieure de la bordure longitudinale afin d'assurer un montage de la bordure longitudinale ajustable en position latérale, par coopération des crans avec l'une ou l'autre des séries de fentes.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue en perspective du mécanisme du distributeur où les objets à délivrer sont disposés à plat dans la glissière inclinée et où les pattes de maintien ou de libération sont coaxiales avec les pattes d'éjection montées dans un plan différent, l'ensemble formant une bascule. L'ensemble est actionné par un électroaimant et un ressort de rappel qui manoeuvrent l'axe pivotant.

La figure 2 est une vue schématique selon la figure 1 mettant en évidence la bascule avec ses pattes qui retiennent en place les objets dans la glissière inclinée.

La figure 3 est une vue selon la figure 1, où la bascule éjecte un seul objet à distribuer et retient les autres objets.

La figure 4 est une vue en perspective d'un autre mode de réalisation.

La figure 5 est une vue schématique mettant en évidence la cinématique.

La figure 6 est une vue en perspective d'un autre mode de réalisation dans lequel les axes pivotants des pattes sont disposés dans des plans perpendiculaires.

La figure 7 est une vue schématique de la patte d'éjection et de la patte de maintien ou de libération de l'objet à distribuer.

Les figures 8, 9, 10 mettent en évidence la cinématique des pattes suivant les différentes phases du fonctionnement du distributeur.

Les figures 11 et 12 illustrent la possibilité d'ajuster la position des bordures longitudinales de la glissière.

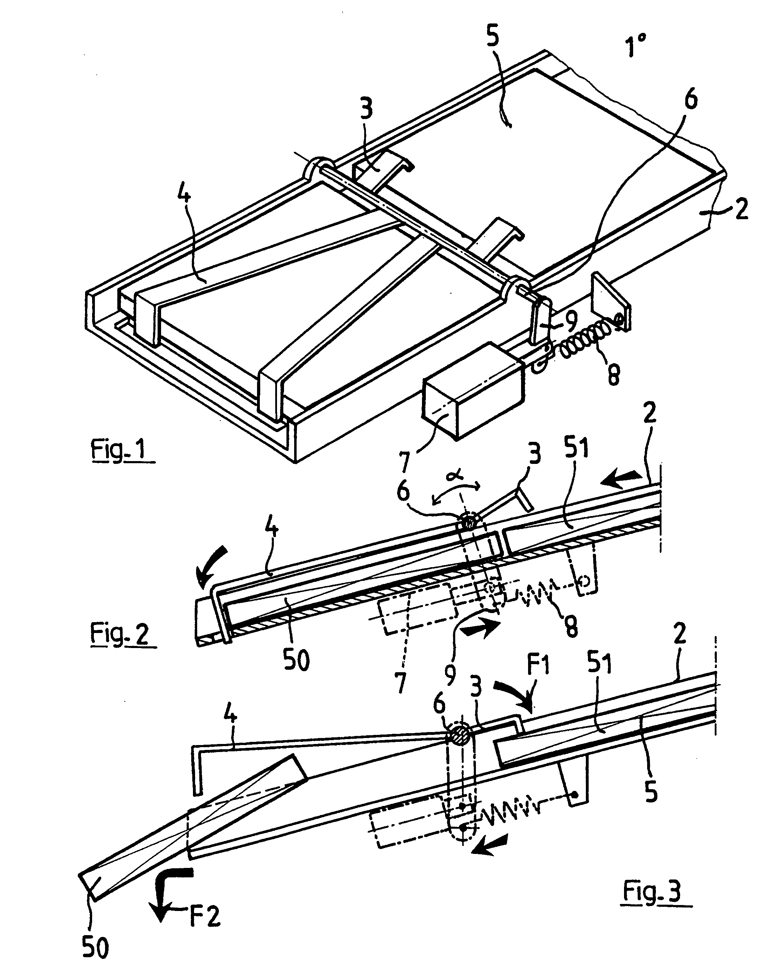

Le distributeur 1 représenté aux figures 1, 2 et 3 est du type utilisant une glissière inclinée 2.

Il est composé de moyens de maintien ou de libératin 3 des objets ou produits 5 stockés sur la glissière 2 et de moyens d'éjection 4.

Ces moyens 3 et 4 sont des pattes.

Selon ce mode de réalisation, les pattes 3, 4 sont montées coaxialement solidaires d'un axe pivotant 6.

Les pattes 3 sont disposées dans un plan différent du plan des pattes 4.

L'angle intérieur α peut par exemple être de 150° et ce, de manière à ce que les pattes 3 de maintien ou de libération des objets agissent alternativement avec les pattes 4 d'éjection.

Comme représentées sur les figures 1, 2 et 3, les pattes 3, 4 ont une forme de L dont la petite barre du L est orientée vers le bas contre les objets 5 à distribuer.

Les moyens ou pattes de maintien ou de libération 3 et les moyens d'éjection 4 sont actionnés par un électroaimant 7 et un ressort de rappel 8 solidaires d'un levier 9 fixé à l'axe pivotant 6.

Selon les objets 5 à distribuer, la glissière 2 est de taille et d'inclinaison variable.

L'ensemble des pattes 3 et des pattes 4 et l'axe pivotant 6 forme une bascule actionnée par l'électroaimant 7 et le ressort de rappel 8.

Le fonctionnement de ce mode de réalisation est le suivant.

Sur la figure 2, l'objet 50 est retenu par les pattes 4, tandis que les pattes 3 sont relevées et ne touchent donc pas l'objet 51 qui est l'avant dernier à être distribué dans la glissière 2.

La gestion électronique (non représentée) par l'électroaimant 7 fait pivoter l'axe pivotant 6;

Comme représenté à la flèche F1, les pattes 3 entrent en contact avec l'avant dernier objet 51 pour le maintenir et lui éviter de glisser, les pattes 4 sont soulevées pour libérer le produit 50 qui est à distribuer et qui tombe par gravité selon la flèche F2.

L'électroaimant 7 est désactivé, le ressort de rappel 8 fait pivoter l'axe pivotant 6, les pattes 3 libèrent le produit 51 qui vient se mettre en place à la place du produit 50 qui est déjà tombé et le dispositif se retrouve à l'état initial représenté à la figure 2.

Selon la forme et le poids des objets à distribuer, au moment de la manoeuvre de la bascule, le poids des objets peut forcer le passage des pattes 3 (de maintien ou de libération). Dans ce cas, la bascule peut marquer une pause pour retenir le produit suivant.

A cet effet, un moyen de temporisation est mis en place en relation avec l'électroaimant 7.

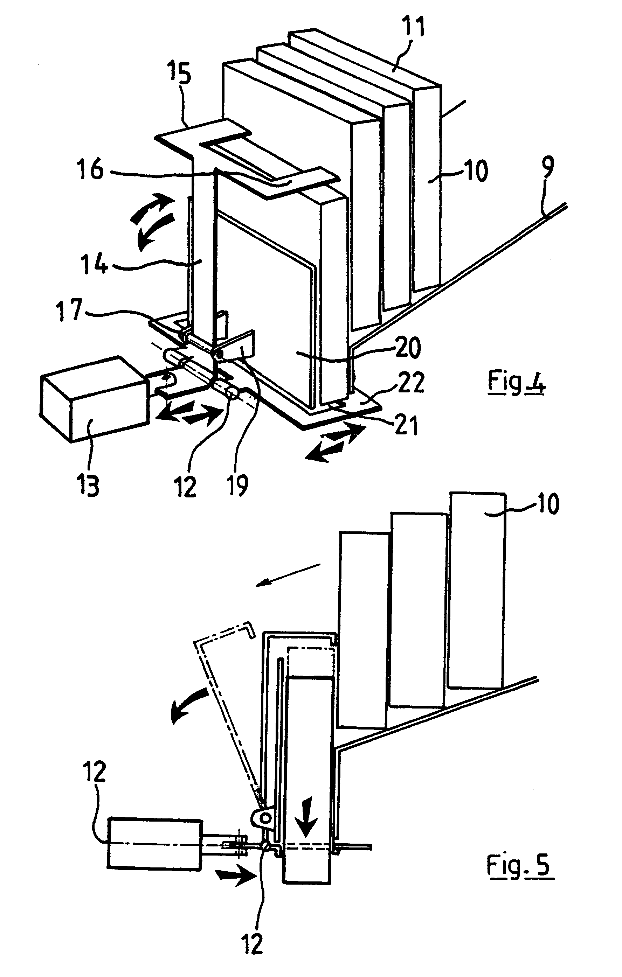

Dans le mode de réalisation représenté dans les figures 4 et 5, les produits ou objets 10 à distribuer sont stockés dans la glissière 9 sur la tranche 11.

L'axe pivotant 12 est actionné par un électroaimant 13.

Sur cet axe pivotant, une tige 14 en forme de T vue de face maintient ou libère les objets 10 avec ses doigts horizontaux 15 et 16.

Sur cette même tige 14 est monté un axe 17 sur lequel est fixée par deux joues 18 et 19, une paroi verticale qui fait office de moyen d'éjection 20.

Cette paroi verticale 20 est donc mobile et permet de déplacer verticalement le dernier objet à distribuer, ce déplacement permet d'ajuster ledit dernier objet en face d'une fenêtre d'éjection 21 découpée dans le plan horizontal 22 qui fait office de support de transition 22 avant l'éjection du dernier objet à distribuer.

Les flèches représentées dans les figures 4 et 5 permettent de comprendre aisément le fonctionnement de ce mécanisme.

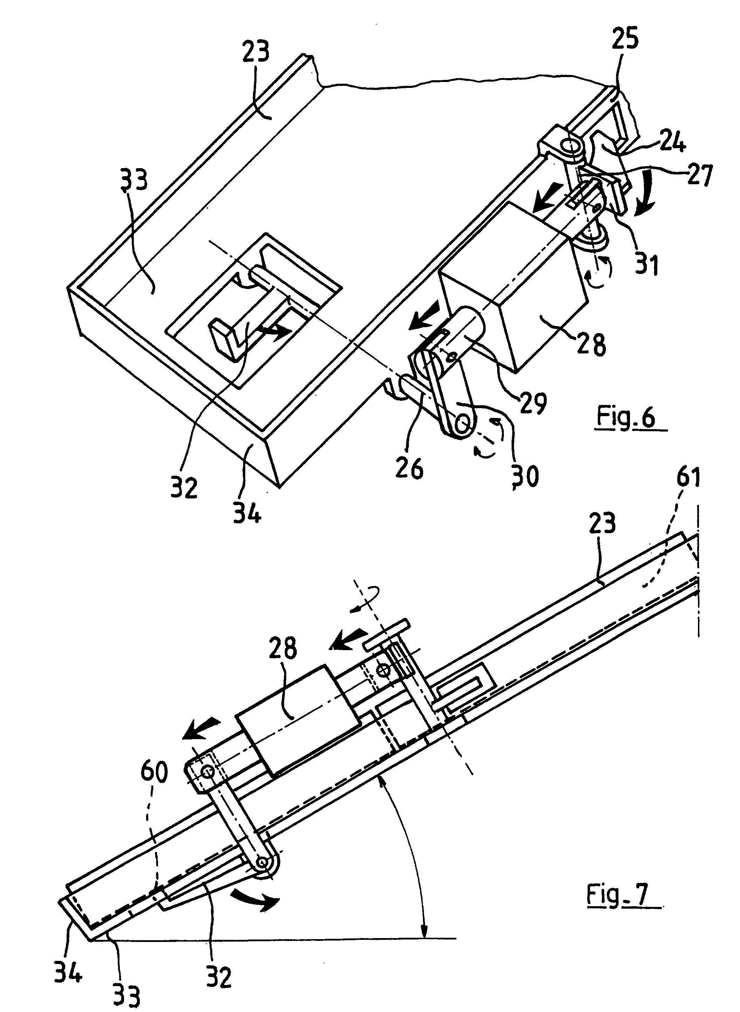

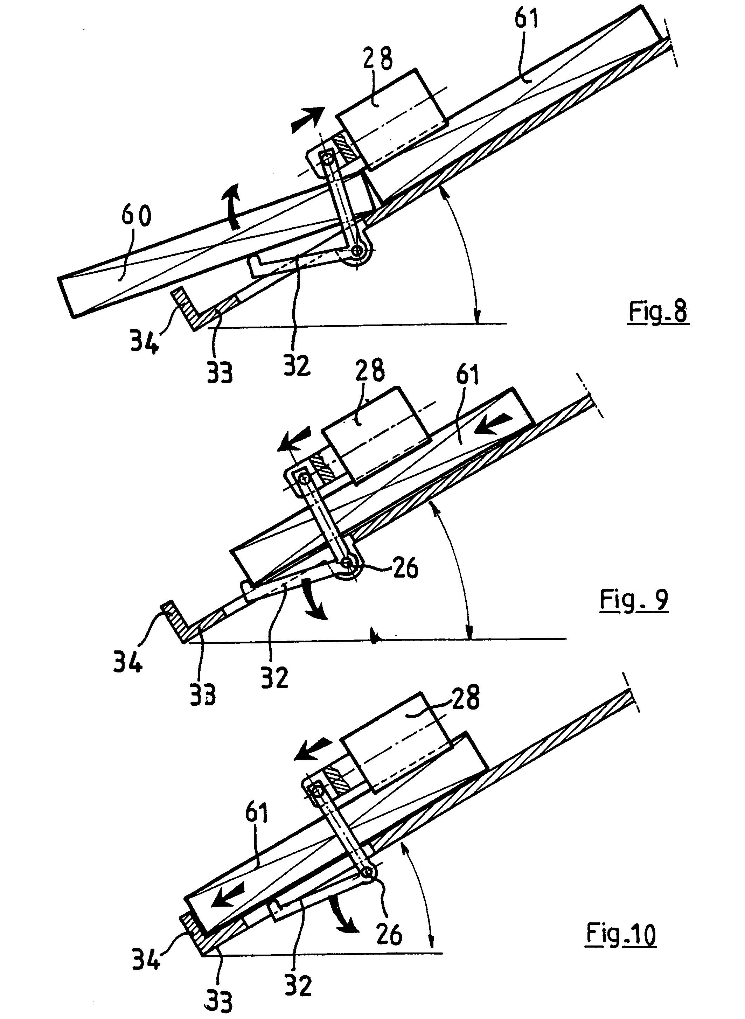

Les figures 6, 7, 8, 9 et 10 représentent un autre mode de réalisation.

Dans ce mode de réalisation, le moyen d'éjection 32 est une patte 32 formant un ergot d'éjection dans la partie terminale 33 du plan incliné de la glissière 23, ledit ergot d'éjection 32 fait saillie dans ledit plan de la partie terminale 33 pour basculer l'objet à distribuer hors de la glissière 23 et au dessus de son rebord frontal 34.

Le moyen de maintien et de libération de l'objet dans la glissière 23 est un ergot latéral 24 disposé sur une des bordures 25 longitudinales de la glissière inclinée 23.

La patte d'éjection ou ergot 32 et l'ergot latéral 24 sont solidaires chacun de leur propre axe pivotant 26 et 27.

Les deux axes pivotants 26, 27 ne sont pas dans le même plan.

Les deux axes 26 et 27 sont dans des plans perpendiculaires entre eux.

Ils sont actionnés par un électroaimant 28 qui agit par un axe 29 sur deux biellettes 30 et 31 qui agissent chacune sur un axe pivotant 26 et 27.

Les flèches représentées sur les figures mettent en évidence l'action des axes et des biellettes.

Les figures 7, 8, 9 et 10 mettent en évidence la distribution des produits ou objets à distribuer.

L'objet 60 est celui qui se trouve le premier à être éjecté et qui est contre le rebord frontal 34.

Tandis que l'ergot d'éjection 32 soulève l'objet 60 pour le faire basculer, l'ergot latéral 24 retient l'objet 61.

Puis l'ergot latéral 24 libère l'objet 61 qui vient occuper la place de l'objet 60 qui a été éjecté, l'ergot d'éjection 32 redescend sous le plan de la glissière 23.

La présente invention a l'avantage de pouvoir délivrer différents types de produits tels des cédéroms, des disques compacts ou des cassettes vidéo.

Pour assurer une parfaite adaptation au type d'objets à distribuer, l'invention pourra présenter une ou plusieurs bordures longitudinales (62) ajustables en position latérale.

Ainsi, si l'objet est plus ou moins large, un ajustement des bordures (62) suffira à adapter le distributeur.

Pour ce faire, des moyens de réglage de la position latérale de la bordure longitudinale (62) sont proposés.

Selon un mode préféré, ces moyens sont formés par coopération de crans (63) sur la tranche inférieure (65) de la bordure (62) et de fentes (64) formées dans l'épaisseur de la glissière (2).

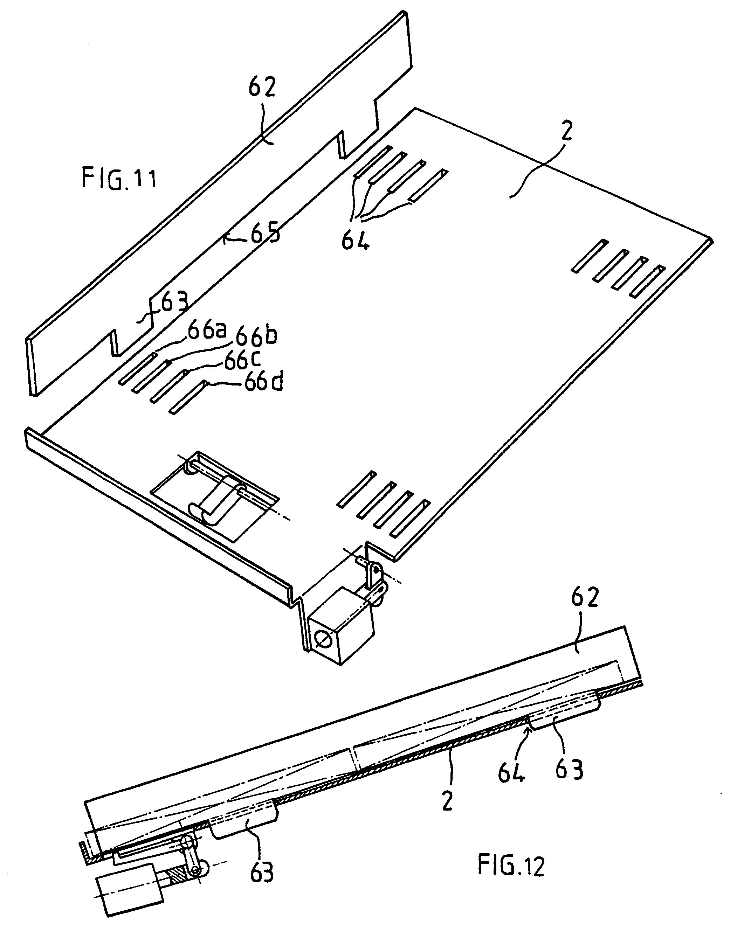

Cette configuration est présentée aux figures 11 et 12.

Comme illustré, on formera deux séries (66a,b,c,d) de fentes (64) ou plus. Ces séries (66a,b,c,d) sont chacune constituée d'une ou plusieurs fentes (64) alignées dans le sens longitudinal et présentant donc la même position latérale.

Dans un mode de réalisation, les deux bordures longitudinales (62) sont ajustables et 4 positions latérales sont possibles pour chacune d'entre elles, comme le montre la figure 11.

### REFERENCES

- 1.: Distributeur
- 2.: Glissière inclinée
- 3.: Moyens de maintien ou de libération des objets
- 4.: Moyens d'éjection des objets
- 5.: Produit ou objet à distribuer
- 6.: Axe pivotant
- 7.: Electroaimant
- 8.: Ressort de rappel
- 9.: Glissière
- 10.: Objet à distribuer
- 11.: Tranche de l'objet à distribuer
- 12.: Axe pivotant
- 13.: Electroaimant
- 14.: Tige
- 15,16.: Doigts horizontaux
- 17.: Axe
- 18,19.: Joues
- 20.: Paroi verticale faisant office de moyen d'éjection
- 21.: Fenêtre d'éjection
- 22.: Support de transition
- 23.: Glissière
- 24.: Ergot latéral
- 25.: Bordure longitudinale
- 26.: Axe pivotant de la patte d'éjection 21
- 27.: Axe pivotant
- 28.: Electroaimant
- 29.: Axe de l'électroaimant
- 30.: Biellette de l'axe 26
- 31.: Biellette de l'axe 27
- 32.: Moyen d'éjection ou patte d'éjection
- 33.: Partie terminale
- 34.: Rebord frontal
- 50.: Objet
- 51.: Avant dernier objet
- 52.: Rebord frontal
- 60.: Objet
- 61.: Objet
- 62.: Bordure longitudinale réglable
- 63.: Crans
- 64.: Fentes
- 65.: Tranche inférieure
- 66a,b,c,d.: Séries de fentes
- F1,F2.: Flèches

## Revendications

1. Distributeur automatique d'objet du type utilisant des glissières de taille et d'inclinaison adaptées aux caractéristiques de l'objet comprenant des moyens d'éjection de l'objet à distribuer, composé, pour chaque glissière :
1° d'au moins une patte (3,14,24) constitutive de moyens de maintien ou de libération de l'objet suivant celui stocké le plus bas sur la glissière (2,9,23), ladite patte (3,14,24) étant mobile entre une position d'appui sur une paroi de l'objet à maintenir et une position dégagée pour le libérer ;
2° d'au moins une patte (4,20,32) constitutive de moyens d'éjection de l'objet stocké le plus bas sur la glissière (2, 9, 23), ladite patte (4,20,32) étant mobile entre une position d'éjection et une position de repos ;
3° d'un électroaimant (7,13,28) géré électroniquement pour actionner en rotation à la fois un axe pivotant (6,17,27) entraînant la patte (3,14,24) constitutive des moyens de maintien ou de libération et un axe pivotant (6,12,26) entraînant la patte (4,20,32) constitutive des moyens d'éjection ;
et dans lequel respectivement les positions d'appui et d'éjection et les positions dégagée et de repos correspondent chacune à un état d'actionnement de l'électroaimant (7,13,28), **caractérisé par le fait**
- **que** la patte (3, 14, 24) constitutive de moyens de maintien ou de libération est mobile en rotation, par fixation sur un axe pivotant (6, 17, 27) ;
- **que** la patte (4, 20, 32) constitutive des moyens d'éjection est mobile en rotation, par fixation sur un axe pivotant (6, 12, 26)
et
**qu'**il présente au moins un moyen de temporisation en relation avec l'électroaimant (7,13,28) pour qu'il marque un temps de pause lorsque la patte (3,14,24) constitutive des moyens de maintien ou de libération est en position d'appui.

2. Distributeur selon la revendication 1 **caractérisé par le fait**
**que** la patte (4,20,32) constitutive des moyens d'éjection a une forme de L dont la petite barre, par sa longueur, maintient les objets (5,10,60,61).

3. Distributeur selon l'une quelconque des revendications 1 à 2, **caractérisé par le fait**
**que** la patte (3,14,24) constitutive des moyens de maintien ou de libération et la patte (4,20,32) constitutive des moyens d'éjection ont le même axe pivotant (6) et qu'elles sont fixées radialement sur ledit axe (6) selon des rayons de directions différentes pour être alternativement en contact avec les objets stockés (5,10,60,61).

4. Distributeur selon l'une quelconque des revendications 1 à 2 **caractérisé par le fait**
**que** les axes pivotant (12,17) des pattes (14) constitutives des moyens de maintien ou de libération et des pattes (20) constitutives des moyens d'éjection sont parallèles.

5. Distributeur selon l'une quelconque des revendications 1 à 2, **caractérisé par le fait**
**que** les axes pivotant (26,27) des pattes (24) constitutives des moyens de maintien ou de libération et des pattes (32) constitutives des moyens d'éjection sont perpendiculaires.

6. Distributeur selon la revendication 4 **caractérisé par le fait**
**que** la patte (20) constitutive des moyens d'éjection se termine par une paroi verticale, les objets (10) étant disposés verticalement sur la glissière inclinée (9), la glissière inclinée (9) débouchant sur une fenêtre (21) disposée dans un plan inférieur à ladite glissière (9), ladite fenêtre (21) étant découpée dans un plan horizontal qui fait office de support de transition (22), la paroi verticale, en se déplaçant, venant se positionner sur l'objet (10) à distribuer en regard de ladite fenêtre (21) pour qu'il soit éjecté par cette fenêtre (21) par simple gravité.

## Patentansprüche

1. Automatische Ausgabevorrichtung für Gegenstände, in der Schienen mit dem Gegenstand angemessenen Größe und Neigung verwendet werden, und die Ausgabemittel für den auszugebenden Gegenstand besitzt, wobei jede Schiene aus folgenden Komponenten besteht:
1/ mindestens einer Lasche (3, 14, 24), die Bestandteil von Halte- oder Freigabemitteln für den auf den untersten, auf der Schiene (2, 9, 23) gelagerten Gegenstand folgenden Gegenstand ist, wobei sich die Lasche (3, 14, 24) zwischen einer Position, in der sie an einer Seite des festzuhaltenden Gegenstandes anliegt und einer Position, in welcher der Gegenstand freigegeben wird, bewegen kann;
2/ mindestens einer Lasche (4, 20, 32), bestehend aus Ausgabemitteln für den untersten, auf der Schiene (2, 9, 23) liegenden Gegenstand, wobei sich die besagte Lasche (4, 20, 32) zwischen einer Ausgabeposition und einer Ruhestellung bewegen kann;
3/ einem elektronisch gesteuerten Elektromagneten (7, 13, 28), der ein Schwenken sowohl um die Achse (6, 17, 27) zum Antrieb der Lasche (3, 14, 24) des Halte- oder Freigabemittels wie auch der Achse (6, 12, 26) zum Antrieb der Lasche (4, 20, 32) des Ausgabemittels bewirkt;
und in der die Stellungen des Anliegens oder der Ausgabe sowie der Freigabe oder der Ruhestellung jeweils einem Betätigungszustand des Elektromagneten (7, 13, 28) entsprechen, der **gekennzeichnet ist dadurch**,
- daß die Lasche (3, 14, 24) des Halte- bzw. Freigabemittels an einer Schwenkachse (6, 17, 27) befestigt ist und daher drehbar ist,
- daß die Lasche (4, 20, 32) des Ausgabemittels an einer Schwenkachse (6, 12, 26) befestigt und daher drehbar ist,
und
daß sie zumindest ein Zeitverzögerungsmittel in Beziehung mit dem Elektromagneten (7, 13, 28) aufweist, damit dieser eine Pause einlegt, wenn die Lasche (3, 14, 24) der Halte- bzw. Freigabemittel in der Anlageposition ist.

2. Ausgabevorrichtung nach Anspruch 1, **gekennzeichnet dadurch,**
**daß** die Lasche (4, 20, 32) des Ausgabemittels die Form eines "L" besitzt, dessen kurzer Schenkel die Gegenstände (5, 10, 60, 61) festhält.

3. Ausgabevorrichtung nach einem der Ansprüche 1 bis 2, **gekennzeichnet dadurch,**
**daß** die Lasche (3 14, 24) der Halte- bzw. Freigabemittel sowie die Lasche (4, 20, 32) der Ausgabemittel die gleiche Schwenkachse (6) besitzen und sie in unterschiedlichen Richtungen radial auf der besagten Achse (6) befestigt sind, so dass sie abwechselnd mit den gelagerten Gegenständen (5, 10, 60, 61) in Kontakt sind.

4. Ausgabevorrichtung nach einem der Ansprüche 1 bis 2, **gekennzeichnet dadurch,**
**daß** die Schwenkachsen (12, 17) der Laschen (14) der Halte- bzw. Freigabemittel und die Laschen (20) der Ausgabemittel einander parallel sind.

5. Ausgabevorrichtung nach einem der Ansprüche 1 bis 2, **gekennzeichnet dadurch,**
**daß** die Schwenkachsen (26, 27) der Laschen (24) der Halte- bzw. Freigabemittel und die Laschen (32) der Ausgabemittel rechtwinklig zueinander stehen.

6. Ausgabevorrichtung nach Anspruch 4, **gekennzeichnet dadurch,**
**daß** die Lasche (20) des Ausgabemittels mit einer senkrechten Fläche abgeschlossen wird, dass die Gegenstände (10) senkrecht auf der geneigten Schiene (9) stehen und die geneigte Schiene (9) an einem Fenster (21) mündet, das auf einer unterhalb der besagten Schiene (9) liegenden Ebene angeordnet ist und dieses Fenster (21) in einer horizontalen Fläche ausgeschnitten ist, die als Ausgabesupport (22) dient, und die senkrechte Fläche sich durch ihre Bewegung an den auszugebenden Gegenstand (10) vor dem Fenster (21) anlegt, damit dieser durch die Schwerkraft aus dem Fenster (21) herausfällt.

## Claims

1. Automatic distributor of objects of the type that uses slides of size and slope adapted to the nature of the objects and including means for ejecting the object to be distributed and comprising, for each slide:
1/ at least one tab (3, 14, 24) constituting the means for retaining or releasing the object following the one stored in the lowest position on the slide (2, 9, 23), said tab (3, 14, 24) being mobile between a position where bears on one face of the object to be retained and a position for releasing this object;
2/ at least one tab (4, 20, 32) consisting of means for ejecting the object stored in the lowest position on the slide (2, 9, 23), said tab (4, 20, 32) being mobile between an ejection position and a rest position;
3/ an electromagnet (7, 13, 28) operated electronically to rotate both a hinge pin (6, 17, 27) driving the tab (3, 14, 24) constituting the means for retaining or releasing the object and a hinge pin (6, 12, 26) driving the tab (4, 20, 32) constituting the ejection means;
and in which the bearing and ejection positions and the released and rest positions correspond each one to an activation condition of the electromagnet (7, 13, 28) **characterized by** the fact
- that the tab (3, 14, 24) constituting the retaining or releasing means is rotationally mobile, being fixed on a hinge pin (6, 17, 27);
- that the tab (4, 20, 32) constituting the ejection means is rotationally mobile being fixed on a hinge pin (6, 12, 26)
and
that it presents at least one time-delay means in relation to electromagnet (7, 13, 28) so that it marks a pause when the tab (3, 14, 24) constituting the retaining or releasing means is in a support position.

2. Distributor according to claim 1 **characterized by** the fact
that the tab (4, 20, 32) constituting the ejection means is L shaped, the small bar of which has suitable length to retain the object (5, 10, 60, 61).

3. Distributor according to any of claims 1 to 2 **characterized by** the fact
that the tab (3, 14, 24) constituting the retaining or releasing means and the tab (4, 20, 32) constituting the ejection means have the same hinge pin (6) and that they are radially attached to the said pin (6) according to different direction radii in order to be alternatively in contact with stored objects (5, 10, 60, 61).

4. Distributor according to any of claims 1 to 2 **characterized by** the fact
that hinge pins (12, 17) of the tabs (14) constituting the means for retaining or releasing the tabs (20) constituting the ejection means are parallel.

5. Distributor according to any of claims 1 to 2 **characterized by** the fact
that hinge pins (26, 27) of the tabs (24) constituting the means for retaining or releasing the tabs (32) constituting the ejection means are perpendicular.

6. Distributor according to claim 4 **characterized by** the fact
that tab (20) constituting the ejection means ends in a vertical wall, objects (10) being arranged vertically on a tilted slide (9), that guides to a window (21) arranged in a plane lower than the aforesaid slide (9), the aforementioned window (21) being cutout in a horizontal plane which acts as transition support (22), the vertical wall, while moving, taking up a position on object (10) to be distributed opposite aforementioned window (21) so that it is ejected by this window (21) through simple force of gravity.
